# EUROPÄISCHE PATENTSCHRIFT

(11) **EP 0 961 974 B1**
(45) Veröffentlichungstag und Bekanntmachung des Hinweises auf die Patenterteilung: **04.10.2001**
(21) Anmeldenummer: 98906812.7
(22) Anmeldetag: 16.01.1998
(51) Int. Cl.: G06F 11/34

(54) **VERFAHREN UND SIGNALVERARBEITENDER PROZESSOR MIT KONTROLLE DER BEARBEITUNGSZEIT**
METHOD AND SIGNAL-PROCESSING PROCESSOR WITH CONTROL OF PROCESSING TIME
PROCEDE ET PROCESSEUR POUR TRAITEMENT DE SIGNAUX AVEC CONTROLE DU TEMPS DE TRAITEMENT

(30) Priorität: 25.02.1997 DE 19707454
(43) Veröffentlichungstag der Anmeldung: 08.12.1999
(73) Patentinhaber: Tenovis GmbH & Co. KG, 60362 Frankfurt am Main (DE)
(72) Erfinder: BRANDT, Hubertus, D-64839 Münster (DE)
(74) Vertreter: Leson, Thomas Johannes Alois, Dipl.-Ing.
(86) Internationale Anmeldenummer: DE9800135
(87) Internationale Veröffentlichungsnummer: WO9838578

(56) Entgegenhaltungen:
- EP-A- 0 534 884
- DE-A- 2 230 119
- "METHOD OF DYNAMICALLY TUNING BURST-MODE LOADING ON A SHARED MEMORY REAL TIME DEVICE" IBM TECHNICAL DISCLOSURE BULLETIN, Bd. 37, Nr. 1, 1.Januar 1994, Seite 523 XP000428870

## Beschreibung

### Stand der Technik

Die Erfindung geht von der Gattung aus, wie im unabhängigen Anspruch 1 beziehungsweise 6 angegeben.

Aus der Veröffentlichung IBM Technical Disclosure Bulletin, Bd. 37, Nr. 1, 1. Januar 1994, Seite 523 ist ein digitaler Signalprozessor bekannt mit einem softwaremäßigen Zähler, der die verbleibende Restzeit bis zum nächsten Programmstart zählt, die vom Host geprüft wird.

Bei der digitalen Verarbeitung digitalisierter Analogsignale mit Hilfe eines digitalen Signalprozessors (DSP) in Echtzeit muß die Berechnung jeweils innerhalb von Zeitabschnitten einheitlicher Dauer, typischerweise dem Kehrwert der Abtastrate - dem Abtasttakt des digitalisierten Signals - abgeschlossen sein.

Um die Rechenlast eines digitalen Signalprozessors zu ermitteln, werden von den Herstellern in den Software-Simulatoren für solche digitalen Signalprozessoren Hilfsmittel zur Verfügung gestellt, um die Anzahl der benötigten Befehlszyklen je Abtasttakt zu ermitteln. Für einfache Algorithmen ist dieses Verfahren brauchbar. In der Praxis ergeben sich aber komplexere Bedingungen. So kann z.B. die durch Interrupts zusätzlich auftretende Belastung meist nur geschätzt werden.

Bei dem Einsatz von programmierbaren digitalen Signalprozessoren kann eine Verteilung der Aufgaben - teils durch die verwendeten Algorithmen bedingt - über mehrere Abtasttakte notwendig sein. Es ergeben sich zwangsweise unterschiedliche Rechenlaufzeiten in verschiedenen Abtasttakten. Dadurch wird eine Rechenlaufzeitkontrolle, die durch Berechnung der benötigten Befehlszyklen erfolgt, sehr aufwendig. Wenn dann später Modifikationen an der Software für den digitalen Signalprozessor oder auch für die Hardware nötig sind - z.B. Änderungen im Programm oder sogenannte Waitstateänderungen - ist dieses Verfahren in der Praxis nicht durchführbar, da viel zu aufwendig.

In der Regel wird ein digitaler Signalprozessor in seinem Programmablauf auf den Abtasttakt synchronisiert, z.B. per Interrupt oder externem, abfragbarem Pin oder interem Register, welches den Zustand eines externen Signals anzeigt.

Da die verfügbaren digitalen Signalprozessoren aber keinen weiteren zeitlichen Bezug zur Verfügung haben, ist es mit diesen digitalen Signalprozessoren nicht möglich, die innerhalb eines Abtasttaktes benötigte Rechenzeit unter Echtzeitbedingungen zu ermitteln.

### Vorteile der Erfindung

Der Anmeldungsgegenstand mit den Merkmalen des Anspruches 1, 6 hat folgenden Vorteil:

Durch Ausnutzung des Ausgangs des Zählers wird es möglich, eine exakte Kontrolle über die Rechenlast in der Echtzeitumgebung zu erlangen. Die Auswertung, ob die Bearbeitungszeit einer Folge von Bearbeitungsschritten die Dauer eines Zeitabschnittes übersteigt, wird mit Hilfe der DSP_Software durchgeführt. Die Programmierung obliegt dem Anwender. So kann eine bessere Auslastung der teueren Resourcen eines digitalen Signalprozessors erfolgen. Eine Überlastung eines digitalen Signalprozessors durch Fehlabschätzungen der Rechenzeiten kann vermieden werden.

Vorteilhafte Weiterbildungen sind in den abhängigen Ansprüchen angegeben, deren Merkmale auch, soweit sinnvoll, miteinander kombiniert werden können.

### Zeichnung

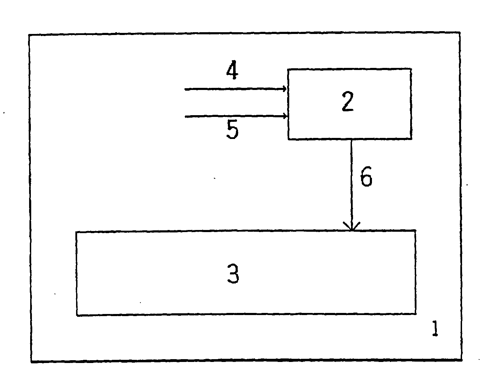

Ein Ausführungsbeispiel der Erfindung ist in der Zeichnung gezeigt und in der nachfolgenden Beschreibung näher erläutert.
Die Zeichnung zeigt schematisch einen digitalen Signalprozessor 1 mit einem Zähler 2, der von einem geeigneten Takt inkrementiert wird. Dieser Takt wird einem Takteingang 5 zugeführt. Dazu kann insbesondere die Taktversorgung des digitalen Signalprozessors oder ein PCM-Bit-Takt benutzt werden. Zum Rücksetzen dient ein Set/Reset-Eingang 4.

Unmittelbar bei Beginn eines neuen Abtasttaktes wird der Zähler 2 auf immer denselben Anfangswert, insbesondere Null gesetzt, beispielsweise per Softwarebefehl oder Hardwareverknüpfung.

Hat der digitale Signalprozessor 1 innerhalb eines Abtasttaktes seine Aufgaben erledigt, kann der Zählerstand am Ausgang 6 abgefragt und eine Auswertung vorgenommen werden.

Insbesondere ist es wichtig zu erfahren, ob das Programm innerhalb des Abtasttaktes beendet wurde. Dazu muß dann der Zählerstand mit einem rechnerisch ermittelten Grenzwert verglichen werden.

Weiterhin ist z.B. eine Maximumauswertung über mehrere Abtasttakte möglich.

Die Erfindung ist bei allen frei programmierbaren digitalen Signalprozessoren anwendbar.

Damit wird es möglich, bei Änderungen der Software oder auch Hardware eines digitalen Signalprozessors vor dessen endgültigem Einsatz festzustellen, ob er die Rechenlast im Echtzeitbetrieb bewältigen kann.

## Patentansprüche

1. Verfahren zur Kontrolle eines digitalen Signalprozessors (1), der vorgesehen ist, um jeweils in Zeitabschnitten einheitlicher Dauer Folgen von Bearbeitungsschritten durchzuführen, daraufhin, ob die Bearbeitungszeit einer solchen Folge die Dauer eines Zeitabschnittes übersteigt, wobei der digitale Signalprozessor einen Zähler aufweist, **dadurch gekennzeichnet**,
- daß ein digitaler Signalprozessor (1) verwendet wird, auf dessen Chip hardwaremäßig ein Zähler (2) vorgesehen ist,
- daß der Zähler (2) jeweils zu Beginn eines Zeitabschnittes auf denselben Anfangszählerstand gesetzt wird,
- daß der Zählerstand anschließend mit einer konstanten Rate inkrementiert oder dekrementiert wird,
- daß jeweils am Ende der Folge von Bearbeitungsschritten, die für den Zeitabschnitt vorgesehen sind, der Zählertstand abgefragt wird.

2. Verfahren nach Anspruch 1, **dadurch gekennzeichnet, daß** der Zeitabschnitt einer Abtastperiode eines digitalisierten Analogsignals entspricht.

3. Verfahren nach Anspruch 1 oder 2, **dadurch gekennzeichnet, daß** der abgefragte Zählerstand mit dem Grenzzählerstand verglichen wird, der jeweils bis zum Ende eines Zeitabschnittes erreichbar ist.

4. Verfahren nach einem der vorangehenden Ansprüche, **dadurch gekennzeichnet, daß** der Zählerstand von dem Takt der Taktversorgung des digitalen Signalprozessors inkrementiert beziehungsweise dekrementiert wird.

5. Verfahren nach einem der Ansprüche 1 bis 3, **dadurch gekennzeichnet, daß** der Zählerstand von dem PCM-Bit-Takt des zu bearbeitenden Signals inkrementiert beziehungsweise dekrementiert wird.

6. Signalverarbeitender Prozessor
- mit einem digitalen Signalprozessor (1), der vorgesehen ist, um jeweils in Zeitabschnitten einheitlicher Dauer Folgen von Verarbeitungsschritten durchzuführen, wobei der digitale Signalprozessor einen Zähler aufweist **gekennzeichnet durch** folgende Merkmale:
- es sind Mittel vorgesehen zur Kontrolle, ob die Bearbeitungszeit einer solchen Folge von Verarbeitungsschritten die Dauer eines Zeitabschnittes übersteigt,
- mit dem digitalen Signalprozessor (1) ist auf demselben Chip hardewaremäßig ein Zähler (2) vorgesehen, der jeweils mit Beginn eines Zeitabschnittes automatisch auf denselben Anfangszählerstand setzbar ist,
- für den Zähler (2) ist eine Zuführung (5) vorgesehen, die ihm Zählimpulse mit einer konstanten Rate liefert,
- der Zähler hat einen Ausgang, der jeweils am Ende eines Zeitabschnittes eine Abfrage des Zählerstandes erlaubt.

7. Prozessor nach Anspruch 6, **dadurch gekennzeichnet, daß** die Zuführung für den Zähler mit der Taktversorgung des digitalen Signalprozessors verbunden ist.

8. Prozessor nach Anspruch 6, **dadurch gekennzeichnet, daß** die Zuführung für den Zähler mit einer Leitung verbunden ist, die den PCM-Bit-Takt des zu bearbeitenden Signals führt.

## Claims

1. Method for monitoring a digital signal processor (1), which is intended to perform sequences of processing ateps each in time segments of uniform duration, as to whether the processing time of such a sequence exceeds the duration of a time segment, the digital signal processor having a counter, **characterized in that**
- a digital aignal processor (1) is used, on whose chip a counter (2) is provided as hardware,
- the counter (2) is set to the same initial counter state at the start of each time segment,
- the counter state is then incremented or decremented at a constant rate,
- the counter state is interrogated at the end of the sequence of processing steps intended for each time segment.

2. Method according to claim 1, **characterized in that** the time segment corresponds to a sampling period of a digitized analog signal.

3. Method according to claim 1 or 2, **characterized in that** the interrogated counter state is compared with the limit counter state that is attainable by the end of each time segment.

4. Method according to any one of the preceding claims, **characterized in that** the counter state is incremented or decremented by the clock pulse of the clock pulse supply of the digital signal processor.

5. Method according to any one of claims 1 to 3, **characterized in that** the counter state is incremented or decremented by the PCM bit clock pulse of the signal to be processed.

6. Signal-processing processor
- having a digital signal processor (1) which is intended to perform sequences of processing steps each in time segments of uniform duration, the digital signal processor having a counter,
**characterized by** the following characteristics:
- means are provided for monitoring whether the processing time of such a sequence of processing steps exceeds the duration of a time segment,
- with the digital signal processor (1) , a counter (2) is provided as hardware on the same chip and can be set automatically to the same initial counter state at the start of each time segment,
- a supply lead (5) is provided for the counter (2) and supplies the counter with counting pulses at a constant rate,
- the counter has an output which allows the counter state to be interrogated at the end of each time segment.

7. Processor according to claim 6, **characterized in that** the supply lead for the counter is connected to the clock pulse supply of the digital signal processor.

8. Processor according to claim 6, **characterized in that** the supply lead for the counter is connected to a line which carries the PCM bit clock pulse of the signal to be processed.

## Revendications

1. Procédé de contrôle d'un processeur numérique de signaux (1) qui est prévu pour exécuter, à intervalles de temps de même durée, des séquences d'étapes de traitement, pour contrôler si le temps de traitement d'une telle séquence est supérieur à la durée d'un intervalle de temps, le processeur numérique de signaux comportant un compteur, **caractérisé en ce que**
- on utilise un processeur numérique de signaux (1) sur la puce duquel est prévu matériellement un compteur (2),
- le compteur (2) est replacé sur la même position initiale,
- la position du compteur est ensuite incrémentée ou décrémentée à une fréquence constante,
- à la fin de la séquence d'étapes de traitement, qui sont prévues pour l'intervalle de temps, la position du compteur est interrogée.

2. Procédé selon la revendication 1, **caractérisé en ce que** l'intervalle de temps correspond à une période de balayage d'un signal analogique numérisé.

3. Procédé selon la revendication 1 ou 2, **caractérisé en ce que** la position interrogée du compteur est comparée à la position limite du compteur, qui peut être atteinte chaque fois avant la fin d'un intervalle de temps.

4. Procédé selon l'une des revendications précédentes, **caractérisé en ce que** la position du compteur est incrémentée, respectivement décrémentée, par le rythme de l'alimentation cadencée du processeur numérique de signaux.

5. Procédé selon l'une des revendications 1 à 3, **caractérisé en ce que** la position du compteur est incrémentée, respectivement décrémentée, par le rythme de bit PCM du signal à traiter.

6. Processeur de traitement de signaux comportant un processeur numérique de signaux (1) qui est prévu pour exécuter, dans des intervalles de temps de même durée, des séquences d'étapes de traitement, le processeur numérique de signaux comportant un compteur, **caractérisé par** les caractéristiques suivantes :
- des moyens sont prévus pour contrôler si le temps de traitement d'une telle séquence d'étapes de traitement est supérieur à la durée d'un intervalle de temps,
- avec le processeur numérique de signaux (1), il est prévu matériellement sur la même puce un compteur (2) qui peut être replacé automatiquement sur la même position initiale, au début d'un intervalle de temps,
- pour le compteur (2), il est prévu une alimentation (5) qui lui fournit des impulsions de comptage à une fréquence constante,
- le compteur possède une sortie qui permet une interrogation de la position du compteur à la fin d'un intervalle de temps.

7. Processeur selon la revendication 6, **caractérisé en ce que** l'alimentation du compteur est reliée à l'alimentation rythmée du processeur numérique de signaux.

8. Processeur selon la revendication 6, **caractérisé en ce que** l'alimentation du compteur est reliée à une ligne qui transmet le rythme de bit PCM du signal à traiter.
